# EUROPÄISCHE PATENTSCHRIFT

(11) **EP 0 670 062 B1**
(45) Veröffentlichungstag und Bekanntmachung des Hinweises auf die Patenterteilung: **17.09.1997**
(21) Anmeldenummer: 93924525.4
(22) Anmeldetag: 18.11.1993
(51) Int. Cl.: G06F 12/06

(54) **ANORDNUNG MIT STECKBAREN FUNKTIONSEINHEITEN**
ARRANGEMENT WITH PLUG-IN FUNCTIONAL UNITS
AGENCEMENT COMPORTANT DES UNITES FONCTIONNELLES ENFICHABLES

(30) Priorität: 19.11.1992 DE 4239030
(43) Veröffentlichungstag der Anmeldung: 06.09.1995
(73) Patentinhaber: SIEMENS AKTIENGESELLSCHAFT, 80333 München (DE)
(72) Erfinder: ABERT, Michael, D-76474 Au (DE); BLOCK, Siegfried, D-76870 Kandel (DE); BOZENHARDT, Johannes, D-76275 Ettlingen (DE); LEIGSNERING, Franz, D-76275 Ettlingen (DE); PFATTEICHER, Werner, D-76327 Pfinztal (DE); SCHEWE, Franz-Clemens, D-76227 Karlsruhe (DE)
(86) Internationale Anmeldenummer: DE9301097
(87) Internationale Veröffentlichungsnummer: WO9411827

(56) Entgegenhaltungen:
- US-A- 4 050 098
- US-A- 5 129 069

## Beschreibung

Die Erfindung betrifft eine Anordnung gemäß dem Oberbegriff des Anspruchs 1.

In speicherprogrammierbaren Steuerungen werden im allgemeinen eine oder mehrere Zentralbaugruppen und mehrere Funktionsbaugruppen, z. B. Baugruppen zur digitalen oder analogen Ein- und Ausgabe von Signalen, über einen Adreß-, Daten- und Steuerleitungen aufweisenden Systembus miteinander verbunden. Die Baugruppen sind in Steckplätze eines Zentral- oder Erweiterungsgerätes gesteckt, und zur Adressierung der Funktionsbaugruppen durch die Zentralbaugruppen während Schreib- oder Lesezugriffen sind Mittel zur Adreßcodierung und -decodierung vorgesehen.

Damit auf eine Adreßcodierung verzichtet werden kann, ist in der europäischen Patentanmeldung 0 486 818 vorgeschlagen, je eine Leitung zwischen einem Steuergerät und einzelnen Modulen eines Steuerungssystems vorzusehen. Das Steuergerät adressiert die Module durch Übertragung unterschiedlicher Datenwörter über diese Leitungen. Eine derartige Adressierung in einer Anordnung mit steckbaren Funktionseinheiten bedeutet, daß ein spezieller Steckplatz für die Funktionseinheit vorgesehen werden muß, die Schreib- und Lesezugriffe auf andere Funktionseinheiten ausführt.

Eine Anordnung der eingangs genannten Art ist aus der US-A-5 129 069 bekannt. Die aktive Funktionseinheit (CPU-Einheit) ist in dieser bekannten Anordnung nicht in einen beliebigen Steckplatz steckbar.

Der vorliegenden Erfindung liegt die Aufgabe zugrunde, eine Anordnung der eingangs genannten Art zu schaffen, in welcher eine Schreib- und Lesezugriffe ausführende Funktionseinheit in jeden Steckplatz steckbar ist.

Diese Aufgabe wird in einer Anordnung der eingangs genannten Art durch die im kennzeichnenden Teil des Anspruchs 1 angegebenen Maßnahmen gelöst.

In einer Ausgestaltung der Erfindung sind Subadressen über den Adreßbus übertragbar. Dadurch sind z. B. unterschiedliche Speicherbereiche der Funktionseinheiten adressierbar.

Die erfindungsgemäße Anordnung wird insbesondere in einer speicherprogrammierbaren Steuerung eingesetzt, vorzugsweise in einer speicherprogrammierbaren Steuerung mit einem Zentralgerät und mindestens einem Erweiterungsgerät, die über ein Verbindungskabel miteinander verbunden sind, welches den System- und Adreßbus, die Adreßleitungen und weitere Adreßleitungen zur Adressierung des Erweiterungsgerätes aufweist.

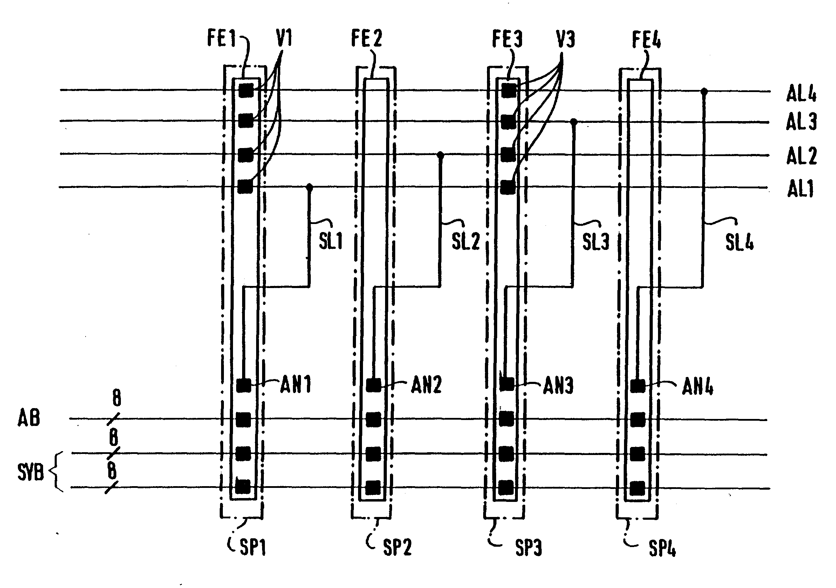

Anhand der Zeichnung, in der ein Ausführungsbeispiel der Erfindung veranschaulicht ist, werden die Erfindung sowie deren Ausgestaltungen und Vorteile näher erläutert.

Die Figur zeigt ein Prinzipschaltbild einer Anordnung mit Steckplätzen.

Mit SP1 ... SP4 sind Steckplätze bezeichnet, die über einen acht Daten- und acht Steuerleitungen aufweisenden Systembus SYB miteinander verbunden sind. Von Steckplatz zu Steckplatz sind Adreßleitungen AL1 ... AL4 an Verbindungsmittel dieser Steckplätze geführt, von denen die erste Adreßleitung AL1 über eine Leitung SL1 an einen Auswahlanschluß AN1 des Steckplatzes SP1 angeschlossen ist. Entsprechend sind die Adreßleitungen AL2, AL3 und AL4 über Leitungen SL2, SL3 und SL4 mit Auswahlanschlüssen AN2, AN3 und AN4 der Steckplätze SP2, SP3 und SP4 verbunden. Funktionseinheiten FE1 ... FE4 sind in die Steckplätze SP1, ... beliebig steckbar, wozu Schreib- und Lesezugriffe ausführende Funktionseinheiten zur Adressierung der restlichen Funktionseinheiten mit allen Adreßleitungen AL1 ... AL4 verbindbar sein müssen. Im vorliegenden Beispiel greifen die Funktionseinheiten FE1, FE3 lesend oder schreibend auf die Einheiten FE2, FE4 zu. Dazu weisen die Funktionseinheiten FE1 und FE3 Mittel, z. B. in Form von Messer- oder Federkontakten, auf, um eine Verbindung V1, V3 mit den Verbindungsmitteln der Steckplätze und damit mit den Adreßleitungen AL1 ... AL4 herzustellen. Die adressierbaren Funktionseinheiten FE2 und FE4 weisen ebenfalls Mittel in Form eines Feder- oder Messerkontaktes auf, wodurch der Auswahlanschluß AN2, AN4 der Steckplätze SP2, SP4 mit den Funktionseinheiten FE2, FE4 kontaktiert. Die Funktionseinheiten FE1, FE3 adressieren die Funktionseinheiten FE2, FE4 mit einem Signal, z. B. einer logischen "1", über die Adreßleitungen AL2, AL4 und die Auswahlanschlüsse AN2, AN4. Über die Leitungen AL1, AL3 und die Auswahlanschlüsse AN1, AN3 können sich die Funktionseinheiten FE1, FE3 gegenseitig adressieren. Damit unterschiedliche Bereiche einer Funktionseinheit FE1, ... angesprochen werden können, ist ein Adreßbus AB vorgesehen, der im vorliegenden Beispiel acht Adreßleitungen aufweist und die Steckplätze SP1, ... miteinander verbindet. Mit diesem 8 Bit breiten Adreßbus sind Zugriffe auf 256 unterschiedliche Bereiche einer über die Adreßleitungen AL1, ... adressierten Funktionseinheit möglich.

## Patentansprüche

1. Anordnung
- mit mehreren Steckplätzen (SP1, ...), die über einen Daten- und Steuerleitungen aufweisenden Systembus (SYB) und einen Adreßbus (AB) miteinander verbunden sind,
- mit an Verbindungsmittel (V1, V3) der Steckplätze (SP1, ...) geführten Adreßleitungen (AL1, ...), von denen jeweils eine zusätzlich über eine entsprechende Leitung (SL1, ...) an einen Auswahlanschluß (AN1, ...) eines Steckplatzes (SP1, ...) angeschlossen ist,
- mit steckbaren Funktionseinheiten (FE1, ...), von denen mindestens eine (FE1; FE3) Mittel (V1, V3) zum Verbinden der Adreßleitungen (AL1, ...) mit dieser Einheit aufweist und jede der restlichen Funktionseinheiten (FE2; FE4) mit Mitteln zum Verbinden der Einheit mit dem Auswahlanschluß (AN1, ...) des Steckplatzes versehen ist,
**dadurch gekennzeichnet**,
- daß mindestens eine der steckbaren Funktionseinheiten, die an die Adreßleitungen (AL1, ...) angeschlossen sind, eine Schreib- und Lesezugriffe ausführende Funktionseinheit ist.

2. Anordnung nach Anspruch 1, dadurch gekennzeichnet,
- daß Subadressen (SP1, ...) über den Adreßbus (AB) übertragbar sind.

3. Speicherprogrammierbare Steuerung mit einer Anordnung nach Anspruch 1 oder 2.

4. Speicherprogrammierbare Steuerung mit einem jeweils eine Anordnung nach Anspruch 2 aufweisenden Zentralgerät und mindestens einem Erweiterungsgerät, die über ein Verbindungskabel verbunden sind, welches den System- und den Adreßbus (SYB, AB), die Adreßleitungen (AL1, ...) und weitere Adreßleitungen zur Adressierung des Erweiterungsgerätes aufweist.

## Claims

1. Arrangement
- having several slots (SP1, ...) which are connected to each other by way of a system bus (SYB) having data lines and control lines and by way of an address bus (AB),
- having address lines (AL1, ...) guided to connection means (V1, V3) of the slots (SP1, ...), of which address lines in each case one is additionally connected by way of a corresponding line (SL1, ...) to a selection terminal (AN1, ...) of a slot (SP1, ...),
- having pluggable function units (FE1, ...), at least one of which (FE1; FE3) has means (V1, V3) to connect the address lines (AL1, ...) to this unit and each of the remaining function units (FE2; FE4) is provided with means to connect the unit to the selection terminal (AN1, ...) of the slot,
characterized in that at least one of the pluggable function units which are connected to the address lines (AL1, ...) is a function unit which carries out writing and reading accesses.

2. Arrangement according to claim 1,
characterized in that sub-addresses (SP1, ...) can be transmitted by way of the address bus (AB).

3. Memory-programmable control having an arrangement according to claim 1 or 2.

4. Memory-programmable control having a central unit having in each case an arrangement according to claim 2 and at least one extension unit, which are connected by way of a connecting cable, which has the system bus and the address bus (SYB, AB), the address lines (AL1, ...) and additional address lines to address the extension unit.

## Revendications

1. Dispositif
- comportant plusieurs emplacements (SP1, ) d'enfichage, qui sont reliés entre eux par l'intermédiaire d'un bus (SYB) de système comportant des conducteurs de données et des conducteurs de commande et d'un bus (AB) d'adresse,
- des conducteurs (AL1, ...) d'adresse reliés à des moyens (V1, V3) de liaison des emplacements d'enfichage (SP1, ...), dont l'un est connecté en supplément par l'intermédiaire d'un conducteur correspondant (SL1, ...) à un raccordement (AN1, ....) de sélection d'un emplacement d'enfichage (SP1,...)
- des unités fonctionnelles enfichables (FE1, ...), dont au moins une (FE1, FE3) comporte des moyens (V1, V3) de liaison des conducteurs d'adresse (AL1, ...) à cette unité, chacune des unités fonctionnelles restantes (FE2; FE4) étant munie de moyens de liaison de l'unité au raccordement (AN1,....) de sélection de l'emplacement d'enfichage,
caractérisé en ce que
au moins l'une des unités fonctionnelles enfichables, qui est connectée aux conducteurs d'adresse (AL1,...) est une unité fonctionnelle exécutant des accès en écriture et des accès en lecture.

2. Dispositif suivant la revendication 1, caractérisé en ce que
des sous-adresses (SP1,...) peuvent être transmises par l'intermédiaire du bus (AB) d'adresse.

3. Commande par programme enregistré comportant un dispositif suivant la revendication 1 ou 2.

4. Commande par programme enregistré comportant un appareil central comportant un dispositif suivant la revendication 2 et au moins un appareil d'extension, qui sont reliés par l'intermédiaire d'un cadre de liaison, lequel comporte le bus du système et le bus d'adresse (SYB,AB), les conducteurs d'adresse (AL1, ...) et des conducteurs d'adresse supplémentaires pour l'adressage de l'appareil d'extension.
